# EUROPEAN PATENT SPECIFICATION

(11) **EP 3 169 267 B1**
(45) Date of publication and mention of the grant of the patent: **19.12.2018**
(21) Application number: 15756988.0
(22) Date of filing: 13.07.2015
(51) Int. Cl.: A61C 8/00

(54) **OVERDENTURE RETENTION IMPLANT**
DECKPROTHESENRETENTIONSIMPLANTAT
IMPLANT DE RETENUE DE PROTHÈSE DENTAIRE

(30) Priority: 17.07.2014 ZA 201405274
(43) Date of publication of application: 24.05.2017
(73) Proprietor: Southern Implants (Pty) Ltd., 0157 Centurion (ZA)
(72) Inventor: BLACKBEARD, Graham, 0157 Centurion (ZA); CUMMING, Leith, 0157 Centurion (ZA)
(74) Representative: AWA Sweden AB
(86) International application number: PCT/IB2015/055278
(87) International publication number: WO 2016/009320

(56) References cited:
- DE-A1- 19 635 619
- US-A- 5 662 474
- US-A1- 2007 082 320
- US-A1- 2008 097 458
- US-A1- 2010 055 644

## Description

### BACKGROUND TO THE INVENTION

This invention relates to an overdenture retention implant and to an apparatus for installing the implant.

The term "overdenture" refers to replacement teeth which are retained in the mouth of an edentulous person by means of implants permanently fixed to the upper or lower jawbone. In a typical overdenture retention system, each threaded implant is screwed into an implant receiving hole drilled or reamed in the jawbone. An abutment, which is connected to the proximal, i.e. outer end of each implant, projects from the gum and the denture itself is attached in either a permament or removable manner to the abutments.

Conventional implants used for overdenture retention are straight, with the abutment aligned on the axis of the implant. This type of arrangement is acceptable in cases where the teeth of the eventual denture are generally aligned with the jawbone in which the implant is installed. However the straight nature of the known implants renders them somewhat unsuitable for the retention of overdentures used to replace teeth at the sides of the upper jaw. This is because the bone at the sides of the upper jaw is generally somewhat inclined relative to the median plane of the mouth, making proper alignment of the overdenture more difficult and compromising the overall aesthetics of the overdenture installation.

The present invention seeks to provide a solution to the misalignment problem noted above. A prior art for the present invention is provided by US2010/055644.

### SUMMARY OF THE INVENTION

According to the present invention there is provided an overdenture retention implant comprising:
- an elongate, externally threaded implant body to be screwed into a hole formed in a jawbone, the body having a central axis; and
- an implant end structure at a proximal end of the implant body, the implant end structure including a tool engagement portion engagable by an implant installation apparatus operable to rotate the implant to screw the implant body into the hole and a threaded boss to be engaged in threaded manner by an overdenture retention cap configured for attachment thereto of an overdenture,
wherein the tool engagement portion and boss have a common, central axis which intersects the central axis of the implant body at an acute angle, which may be in the range 8° to 24° and is typically approximately 12°.

Preferably, the acute angular inclination of the axis of the end structure relative to the axis of the body is similar to the acute angle which sides of an upper jawbone make with a median plane of the mouth. The angular inclination is typically in the range 8° to 24°, and may be approximately 12°.

The boss of the implant end structure of the implant should be configured to be engaged in threaded manner in a threaded socket of an overdenture retention member, thereby to retain the overdenture on the implant.

Still according to the invention there is provided the combination of an overdenture retention implant as summarized above and an apparatus for installing the implant, the apparatus comprising:
- a fixture mount having a hollow first end defining a fixture mount socket shaped to engage in rotationally fast manner with the tool engagement portion of the implant end structure of the implant and an opposite second end engagable in rotationally fast manner by a rotation tool which can be manipulated to rotate the fixture mount and hence an implant engaged thereby; and
- an anchoring device for releasably anchoring the fixture mount in engagement with the implant, with the central axis of the implant body aligned and coaxial with a central axis of the fixture mount, while the fixture mount and implant are rotated.

In the invention, the fixture mount socket has a central axis inclined relative to a central axis of the fixture mount by an angle which is the same as the angle by which the implant end structure is inclined relative to the central axis of the implant body. This angle may be in the range 8° to 24° and is preferably approximately 12°.

According to the invention, a mouth of the fixture mount socket lies in a plane normal to the central axis of the fixture mount socket.

Still according to the invention, the fixture mount socket includes an internal shoulder and the anchoring device comprises a cap which has a threaded cap socket for threaded engagement with the boss of the implant end structure of the implant, a mouth of the cap socket being arranged to abut the internal shoulder of the fixture mount socket when the cap socket is threaded onto the boss, thereby to anchor the fixture mount in engagement with the tool engagement portion of the implant end structure of the implant.

Preferably a mouth of the fixture mount socket bears on an external shoulder of the implant when the mouth of the cap socket abuts the internal shoulder of the fixture mount. The cap may have a tool engagement socket at an end thereof opposite to the cap socket.

Also described but not part of the invention is an installation apparatus for installing the overdenture retention implant, the apparatus comprising:
- a fixture mount having a hollow first end defining a fixture mount socket shaped to engage in rotationally fast manner with the tool engagement portion of the implant end structure of the implant and an opposite second end engagable in rotationally fast manner by a rotation tool which can be manipulated to rotate the fixture mount and hence an implant engaged thereby; and
- an anchoring device for releasably anchoring the fixture mount in engagement with the implant, with the central axis of the implant body aligned and coaxial with a central axis of the fixture mount, while the fixture mount and implant are rotated.

Other features of the apparatus are as summarized above.

### BRIEF DESCRIPTION OF THE DRAWINGS

Aspects of the invention will now be described in more detail, by way of example only, with reference to the accompanying drawings in which:
- **Figure 1**: shows a side elevation of an overdenture retention implant according to this invention;
- **Figure 2**: shows a side elevation of the fixture mount of an implant installation apparatus according to the invention;
- **Figure 3**: shows a side elevation of the anchoring device of the implant installation apparatus;
- **Figure 4**: shows a side elevation of the overdenture retention implant and installation apparatus in operative combination;
- **Figure 5**: shows a cross-sectional view of the combination seen in Figure 4, and also illustrates an overdenture retention member; and
- **Figure 6**: diagrammatically illustrates the implant installed in an upper jaw bone.

### SPECIFIC DESCRIPTION WITH REFERENCE TO THE DRAWINGS

The implant 10 seen in the drawings has an externally threaded implant body 12. The body 12 has a proximal end 12.1 and a distal end 12.2. The body extends at its proximal end 12.1 from an implant end structure 14 that includes a tool engagement portion 14.1 of hexagonal cross-section and an externally threaded boss 14.2. The body 12 and end structure 14 are typically machined in one piece from a suitable grade of titanium or ceramic.

The implant body 12 has a central axis 20. The implant end structure 14 has a central axis 22 which is common to the tool engagement portion 14.1 and the boss 14.2. The axes 20 and 22 are inclined relative to one another at an acute angle of inclination 24, and intersect at a point 26. More is said subsequently about the angle 24.

The implant end structure 14 also includes a circumscribing shoulder 14.3 between the tool engagement portion 14.1 and the implant body 12. The shoulder lies in a plane 28 normal to the central axis 22 of the implant end structure.

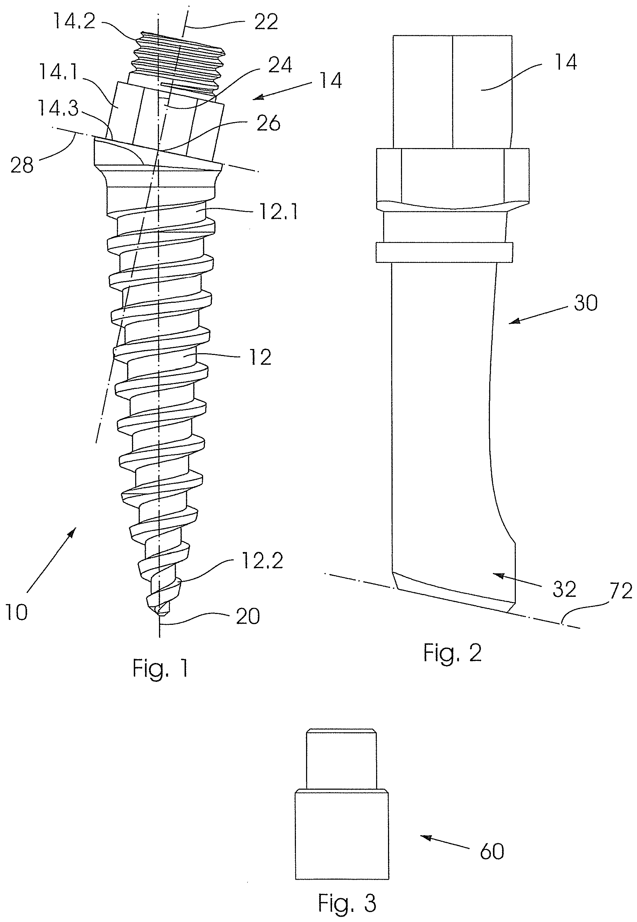

Figure 2 illustrates a fixture mount 30 forming part of an implant installation apparatus according to the invention.

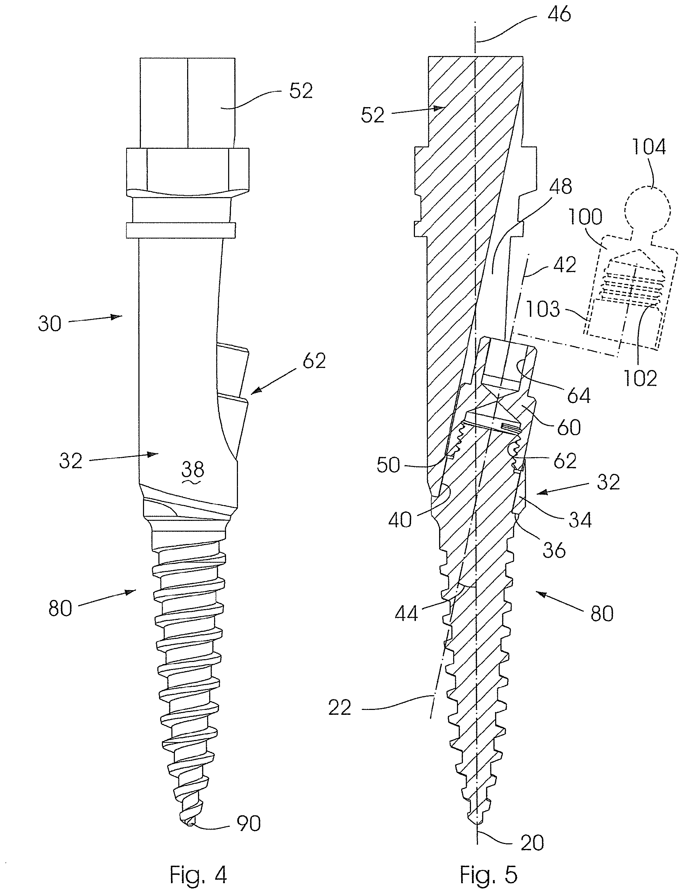

Referring also to Figures 4 and 5, the fixture mount has a partially hollow first end 32 bounded by a wall 34 terminating at an edge 36. Externally, the wall 34 has a round cylindrical surface 38. Internally, the wall 34 defines a fixture mount socket 40 with a hexagonal cross-section complemental to the hexagonal cross-section of the tool engagement portion 14.1 of the implant end structure. The socket 40 has a central axis 42 inclined at an acute angle 44 relative to a central axis 46 of the fixture mount. The angle 44 is the same as the angle 24.

The fixture mount includes an inclined passage or recess 48 which is part-circular in cross-section. The recess is axially aligned with and leads to the socket 40 as illustrated in Figure 5. The fixture mount includes a narrow shoulder 50 which circumscribes an end of the socket 40.

An opposite, second end 52 of the fixture mount is non-round in cross-section so as to be engagable in a rotation transmitting manner by a suitable tool (not shown). In the illustrated case, the end 52 has a hexagonal cross-section and is suitable for engagement by, for example, a spanner.

A further component of the installation apparatus is an anchoring device in the form of a locking cap 60 which has an internally threaded cap socket 62 at one end and a tool engagement socket 64 at the opposite end. The thread of the cap socket 62 is complemental to the thread on the boss 14.2 of the implant end structure 14. The tool-engagement socket 64 has a non-round cross-section, in the illustrated case a hexagonal cross-section, enabling it to be engaged in a rotation-transmitting manner by a cap engaging tool (not shown).

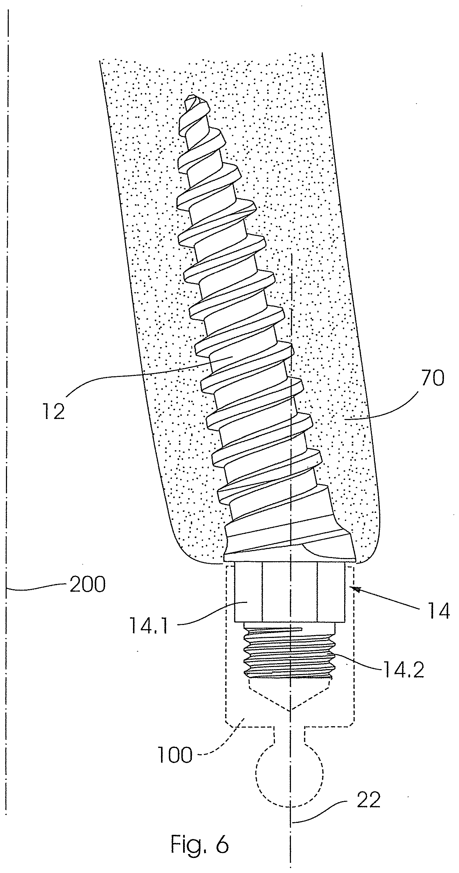

Referring to Figure 6, the implant 10 is installed in use in a hole drilled, reamed or otherwise formed in a jaw bone 70 of an edentulous person who is to be fitted with an overdenture. This is achieved by screwing the implant body 12 tightly into the hole. The fixture mount 30 and cap 60 are used in this process.

The fixture mount is moved towards the proximal end of the implant 10 such that the socket 40 passes over the threaded boss 14.2 and onto the tool-engagement portion 14.1 as seen in Figure 5. With the socket 40 fully received on the tool-engagement portion 14.1, the mouth of the socket seats complementally on the shoulder 14.3 of the implant end structure. It will be understood that for this to happen, the mouth of the socket lies in a plane 72 (Figure 2) which is normal to the central axis 42 of the socket 40.

The cap 60 is then moved along the passage 48 such that the boss 14.2 is received in the cap socket 62. The cap engaging tool mentioned above is now engaged with the cap socket 64 and is used to screw the cap onto the boss.

When tight, the mouth of the socket 62 bears on the internal shoulder 50 of the fixture mount. This prevents the socket 40 from being detached from the tool-engagement portion 14.1 of the implant end structure, so the fixture mount is effectively locked or anchored on the implant, forming the assembly 80 seen in Figures 4 and 5.

With the angular relationships described above, the central axis 20 of the implant body 12 is aligned and coaxial with the central axis 46 of the fixture mount 30. The axes 22 and 42 are also aligned and coaxial.

The assembly can now be taken to the patient's mouth where the distal tip 90 of the implant body 12 is inserted into the preformed hole in the jaw bone. The spanner or other tool mentioned above can now be engaged with the end 52 of the fixture mount. Manipulation of the tool to rotate the fixture mount in the appropriate sense is transmitted to the implant such that the implant body 12 is screwed into the hole.

When the implant body 12 has been tightly screwed into the hole, the tool is disengaged from the fixture mount and the locking cap 60 is unscrewed from the boss 14.2, allowing the fixture mount 30 to be detached from the implant body 10.

An overdenture retention cap 100 can now be screwed onto the boss 14.2. The retention cap 100 may be entirely conventional and, in the illustrated case, has a threaded socket 102 to be screwed onto the boss 14.2 and an enlarged head 104, possibly of elliptical shape, onto which the overdenture itself (not shown) can be engaged, for example by a clipping action.

An advantage of the implant 10 described above is the fact that the central axis 22 of the threaded boss is inclined relative to the central axis 20 of the implant body 12 at the angle 24. The importance of this is described with reference to Figure 6 which diagrammatically illustrates the implant retention cap 100 installed in an upper jaw bone 70. As usual, lateral regions of the jaw bone are themselves inclined relative to a median plane 200 of the mouth. The angle 24 is selected such that with the implant body 12 screwed into a hole which is formed straight into the jaw bone following the inclination of the jaw bone, the boss 14.2, and hence the overdenture retention cap 100 can be generally aligned with the median plane 200, i.e. can be generally vertical. This in turn enables the overdenture itself to be properly oriented in an aesthetically pleasing manner.

It will accordingly be understood that the angle 24 is selected to be similar to the acute angle which the lateral regions of the upper jaw bone make with the median plane 200. In the illustrated example, the angle 24 is typically in the range 8° to 24° and may, for example, be 12°, corresponding to a normal inclination of an upper jaw bone relative to the median plane.

The installation of the inclined implant 10 is considerably facilitated by the use of the installation apparatus consisting of the fixture mount 30 and locking cap 60.

It will be understood that this apparatus makes it possible for the implant body and fixture mount to have aligned axes when assembled together, thereby enabling a conventional tool to be used to screw the implant body 12 into the bone.

## Claims

1. In combination, an overdenture retention implant (10) and an installation apparatus for installing the implant, wherein the implant comprises:
- an elongate, externally threaded implant body (12) to be screwed into a hole formed in a jawbone (70), the body having a central axis (20); and
- an implant end structure (14) at a proximal end (12.1) of the implant body, the implant end structure including a tool engagement portion (14.1) and a threaded boss (14.2) to be engaged in threaded manner by an overdenture retention cap (100) configured for attachment thereto of an overdenture,
wherein the tool engagement portion (14.1) and the boss (14.2) have a common, central axis which intersects the central axis of the implant body at an acute angle to that central axis,
and wherein the installation apparatus comprises:
- a fixture mount (30) having a hollow first end (32) defining a fixture mount socket (40) shaped to engage in rotationally fast manner with the tool engagement portion of the implant end structure of the implant for the purposes of rotating the implant to screw the body into the hole in the jawbone and an opposite second end (52) engagable in rotationally fast manner by a rotation tool which can be manipulated to rotate the fixture mount and hence an implant engaged thereby; and
- an anchoring device for releasably anchoring the fixture mount in engagement with the implant, with the central axis of the implant body aligned and coaxial with a central axis (46) of the fixture mount, while the fixture mount and implant are rotated;
**characterized in that:**
- the fixture mount socket (40) has a central axis (42) inclined relative to the central axis (46) of the fixture mount (30) by an angle (44) which is the same as the angle (24) by which the implant end structure (14) is inclined relative to the central axis (20) of the implant body (12);
- a mouth of the fixture mount socket lies in a plane (72) normal to the central axis of the fixture mount socket; and
- the fixture mount socket includes an internal shoulder (50) and the anchoring device comprises a cap (60) which has a threaded cap socket (62) for threaded engagement with the boss (14.2) of the implant end structure of the implant (10), a mouth of the cap socket being arranged to abut the internal shoulder of the fixture mount socket when the cap socket is threaded onto the boss, thereby to anchor the fixture mount in engagement with the tool engagement portion of the implant end structure of the implant.

2. A combination according to claim 1 wherein the acute angular inclination (24) of the axis (22) of the end structure (14) of the implant (10) relative to the axis (20) of the body (12) of the implant is in the range 8° to 24°.

3. A combination according to claim 2 wherein the acute angular inclination of the axis of the end structure relative to the axis of the body is approximately 12°.

4. A combination according to any one of the preceding claims wherein the mouth of the fixture mount socket (40) bears on an external shoulder (14.3) of the implant (10) when the mouth of the cap socket (62) abuts the internal shoulder (50) of the fixture mount.

5. A combination according to any one of the preceding claims wherein the cap (60) has a tool engagement socket (64) at an end thereof opposite to the cap socket (62).

## Patentansprüche

1. Kombination eines Deckprothesenretentionsimplantats (10) und einer Installationsvorrichtung zur Installation des Implantats, wobei das Implantat umfasst:
- einen langgestreckten, mit einem Außengewinde versehenen Implantatkörper (12), der in ein in einem Kieferknochen (70) ausgebildetes Loch eingeschraubt werden soll, wobei der Körper eine zentrale Achse (20) aufweist; und
- eine Implantatendstruktur (14) an einem proximalen Ende (12.1) des Implantatkörpers, wobei die Implantatendstruktur einen Werkzeugeingriffsabschnitt (14.1) und einen Gewindeansatz (14.2) aufweist, der mit einer Deckprothesenretentionskappe (100), die zur Befestigung einer Deckprothese daran ausgebildet ist, in Gewindeeingriff zu bringen ist,
wobei der Werkzeugeingriffsabschnitt (14.1) und der Ansatz (14.2) eine gemeinsame, zentrale Achse aufweisen, welche die zentrale Achse des Implantatkörpers in einem spitzen Winkel zu dieser zentralen Achse schneidet,
und wobei die Installationsvorrichtung umfasst:
- eine Befestigungshalterung (30), die ein hohles erstes Ende (32) aufweist, das eine Befestigungshalterungshülse (40) definiert, welche so geformt ist, dass sie in verdrehfester Weise mit dem Werkzeugeingriffsabschnitt der Implantatendstruktur des Implantats zum Zwecke des Drehens des Implantats in Eingriff tritt, um den Körper in das Loch in dem Kieferknochen einzuschrauben, und ein entgegengesetztes zweites Ende (52), das in verdrehfester Weise mit einem Drehwerkzeug in Eingriff bringbar ist, das zum Drehen der Befestigungshalterung und folglich eines damit in Eingriff stehenden Implantats gehandhabt werden kann; und
- eine Verankerungsvorrichtung zum lösbaren Verankern der Befestigungshalterung im Eingriff mit dem Implantat, wobei die zentrale Achse des Implantatkörpers zu einer zentralen Achse (46) der Befestigungshalterung ausgerichtet und koaxial dazu ist, während die Befestigungshalterung und das Implantat gedreht werden;
**dadurch gekennzeichnet, dass**:
- die Befestigungshalterungshülse (40) eine zentrale Achse (42) aufweist, die relativ zu der zentralen Achse (46) der Befestigungshalterung (30) um einen Winkel (44) geneigt ist, der gleich dem Winkel (24) ist, um den die Implantatendstruktur (14) relativ zu der zentralen Achse (20) des Implantatkörpers (12) geneigt ist;
- eine Öffnung der Befestigungshalterung in einer Ebene (72) senkrecht zu der zentralen Achse der Befestigungshalterung liegt; und
- die Befestigungshalterungshülse eine innere Schulter (50) aufweist und die Verankerungsvorrichtung eine Kappe (60) umfasst, die eine mit Gewinde versehene Kappenhülse (62) für den Gewindeeingriff mit dem Ansatz (14.2) der Implantatendstruktur des Implantats (10) aufweist, wobei eine Öffnung der Kappenhülse so angeordnet ist, dass sie an der inneren Schulter der Befestigungshalterungshülse anliegt, wenn die Kappenhülse auf den Ansatz aufgeschraubt ist, um dadurch die Befestigungshalterung im Eingriff mit dem Werkzeugeingriffsabschnitt der Implantatendstruktur des Implantats zu verankern.

2. Kombination nach Anspruch 1, wobei der spitze Neigungswinkel (24) der Achse (22) der Endstruktur (14) des Implantats (10) relativ zu der Achse (20) des Körpers (12) des Implantats in einem Bereich von 8° bis 24° liegt.

3. Kombination nach Anspruch 2, wobei der spitze Neigungswinkel der Achse der Endstruktur relativ zur Achse des Körpers ungefähr 12° beträgt.

4. Kombination nach einem der vorhergehenden Ansprüche, wobei die Öffnung der Befestigungshalterungshülse (40) auf einer äußeren Schulter (14.3) des Implantats (10) aufliegt, wenn die Öffnung der Kappenhülse (62) an der inneren Schulter (50) der Befestigungshalterung anliegt.

5. Kombination nach einem der vorhergehenden Ansprüche, wobei die Kappe (60) eine Werkzeugeingriffsbuchse (64) an einem Ende derselben gegenüber der Kappenhülse (62) aufweist.

## Revendications

1. En combinaison, implant de retenue de prothèse dentaire (10) et appareil d'installation pour l'installation de l'implant, l'implant comprenant :
- un corps d'implant allongé fileté extérieur (12) à visser dans un trou pratiqué dans un maxillaire (70), le corps comportant un axe central (20) ; et
- une structure terminale d'implant (14) à une extrémité proximale (12.1) du corps d'implant, la structure terminale d'implant incluant une section d'engagement d'outil (14.1) et un bossage fileté (14.2) dans lequel est destiné à s'engager de manière filetée un capuchon de retenue d'implant dentaire (100) conçu pour y attacher en ce une prothèse dentaire,
la section d'engagement d'outil (14.1) et le bossage (14.2) ayant un axe central commun qui coupe l'axe central du corps d'implant suivant un angle aigu par rapport à cet axe central,
et l'appareil d'installation comprenant :
- un support de montage (30) doté d'une première extrémité creuse (32) définissant une douille de support de montage (40) conformée pour s'engager rapidement du point de vue rotationnel dans la section d'engagement d'outil de la structure terminale d'implant de l'implant aux fins de rotation de l'implant pour visser le corps dans le trou du maxillaire et une seconde extrémité opposée (52) dans laquelle peut s'engager rapidement du point de vue rotationnel un outil de rotation qui peut être manipulé pour faire tourner le support de montage et donc un implant dans lequel ce dernier est engagé ; et
- un dispositif d'ancrage pour ancrer de manière dissociable le support de montage en engagement avec l'implant, l'axe central du corps d'implant étant aligné avec un axe central (46) du support de montage pendant que le support de montage et l'implant sont en rotation ;
**caractérisés en ce que** :
- la douille de support de montage (40) a un axe central (42) incliné par rapport à l'axe central (46) du support de montage (30) à raison d'un angle (44) qui est le même que l'angle (24) à raison duquel la structure terminale d'implant (14) est inclinée par rapport à l'axe central (20) du corps d'implant (12) ;
- une embouchure de la douille de support de montage se situe dans un plan (72) perpendiculaire à l'axe central de la douille de support de montage ; et
- la douille de support de montage comporte un épaulement interne (50) et le dispositif d'ancrage comprend un capuchon (60) qui est doté d'une douille de capuchon filetée (62) destinée à s'engager de manière filetée dans le bossage (14.2) de la structure terminale d'implant de l'implant (10), une embouchure de la douille de capuchon étant conçue pour buter contre l'épaulement interne de la douille de support de montage lorsque la douille du capuchon est vissée sur le bossage afin d'ancrer ainsi le support de montage en engagement avec la section d'engagement d'outil de la structure terminale d'implant de l'implant.

2. Combinaison selon la revendication 1, dans laquelle l'inclinaison angulaire aiguë (24) de l'axe (22) de la structure terminale (14) de l'implant (10) par rapport à l'axe (20) du corps (12) de l'implant est de l'ordre de 8° à 24°.

3. Combinaison selon la revendication 2, dans laquelle l'inclinaison angulaire aiguë de l'axe de la structure terminale de l'implant par rapport à l'axe du corps de l'implant est d'environ 12°.

4. Combinaison selon l'une quelconque des revendications précédentes, dans laquelle l'embouchure de la douille de support de montage (40) porte sur un épaulement externe (14.3) de l'implant (10) lorsque l'embouchure de la douille de capuchon (62) bute contre l'épaulement interne (50) du support de montage.

5. Combinaison selon l'une quelconque des revendications précédentes, dans laquelle le capuchon (60) comporte une douille d'engagement d'outil (64) à son extrémité opposée à la douille de capuchon (62).
